# EUROPÄISCHE PATENTANMELDUNG

(11) **EP 1 130 930 A1**
(43) Veröffentlichungstag der Anmeldung: **05.09.2001**
(21) Anmeldenummer: 00104263.9
(22) Anmeldetag: 01.03.2000
(51) Int. Cl.: H04Q 3/66, H04Q 3/00

(54) **Verfahren zur Verbesserung der SS7-Nachrichtenlenkung durch Gruppenbildung**

(71) Anmelder: SIEMENS AKTIENGESELLSCHAFT, 80333 München (DE)
(72) Erfinder: Gradischnig, Klaus D., 82131 Gauting (DE)

(57) **Zusammenfassung**

In einem Telekommunikationsnetz mit Zeichengabesystem 7 wird jeder in einem Netzknoten ankommenden Nachricht, abhängig davon über welchen Weg die Nachricht den Netzknoten erreicht hat, eine Gruppe gₗ zugeordnet. Mengen Sᵢ(Wᵢ) enthalten für einen zu routenden Linkset Wᵢ der Routingtabelle die Gruppen gₗ, für deren Nachrichten ein routen über diesen Link erlaubt ist. Im Fall, daß gₗ der Nachricht ∉ Sᵢ wird die Nachricht verworfen.

## Beschreibung

Verfahren zur Verbesserung der Nachrichtenlenkung durch Gruppenbildung.

Die vorliegende Erfindung betrifft ein Verfahren zur Verbesserung der Nachrichtenlenkung, mit dem ermöglicht wird, daß Wege über solche Knoten im Netz ausgeschlossen werden, über die eine Nachricht, wegen ihres Ursprungs oder wegen ihres bisherigen Weges z.B. aus Gründen der Datensicherheit, nicht vermittelt werden darf.

Das Zeichengabesystem Nr. 7 in Telekommunikationssystemen bedient sich für das Routing der Nachrichten rein zielorientierter Routingtabellen. Dabei wird eine Nachricht abhängig vom Ziel an einen oder mehreren zunächst fest für dieses Ziel zugeordneten Nachbarknoten geschickt. Wenn mehrere gleichberechtigte Nachbarknoten zugeordnet sind, erfolgt die Auswahl, welcher Nachbarknoten tatsächlich genommen wird, normalerweise vom Wert des SLS ( Signaling Link Selection ) Feldes im Nachrichtenkopf ab. Steht der Weg dorthin nicht zur Verfügung, beispielsweise, weil eine Meldung dieses Knotens das Routen untersagt, wie etwa das Signal TFP (Transfer Prohibited), so wird ein in der Tabelle für dieses Ziel genannter Ersatznachbarknoten genommen. Falls kein Ersatznachbarknoten mehr zur Verfügung steht, erfolgt selbst eine TFP Meldung an den sendenden Nachbarknoten. Jedem Ziel ist daher ein geordneter Satz von Nachbarknoten zugeordnet, der als ein Routing Vektor darstellbar ist, dessen Elemente aus den zu routenden benachbarten Knoten für ein bestimmtes Ziel bestehen, angeordnet mit abnehmender Priorität. Allgemein wird dies ein fixed alternative Routing genannt, da für ein Ziel stets der gleiche höchstpriore Weg, eventuell noch abhängig von der Nebenbedingung des SLS Feldes im Nachrichtenkopf, gewählt wird, mit alternativen Ersatzwegen.

Es kann nun sinnvoll sein, Nachrichten zu einem Ziel, die von unterschiedlichen Ausgangspunkten oder von unterschiedlichen Zwischenknoten kommen, selbst dann unterschiedlich zu routen, wenn sie zum selben Ziel gerichtet sind.

Bekannt ist, daß mit dem Einsatz von Screeningfunktionen, wie sie z. B. in der Spezifikation Q.705 definiert sind, verhindert werden kann, daß Nachrichten dann, wenn sie von einem bestimmten Ursprung bzw. einem bestimmten Linkset des Netzes stammen, nicht zu bestimmten Zielen geroutet, sondern verworfen werden. Ein Linkset ist hierbei eine Verbindung zwischen zwei Netzknoten. Diese vorgesehene Methode ist jedoch unflexibel und im Zeichengabesystem 7 nur für jeweils eine Adresse als Ziel anwendbar, da die Methode statisch ist und nicht von den jeweils aktuellen Zuständen der Wege abhängt. Dabei können natürlich mehrere Ziele als Gruppe zusammengefaßt werden und gleichbehandelt werden, wie auch eine Zusammenfassung von Linksets oder Ursprüngen in Frage kommt. Das Zeichengabesystem Nr. 7 sieht keine Möglichkeit vor, flexibel für alle Nachrichten ursprungsabhängig einen Weg für das Routing auszuschließen.

Bekannt ist auch, bei zielorientierten Routingverfahren genau den Einzelfall auszuschließen, daß eine Nachricht über den Linkset, über welchen sie den Netzknoten erreicht hat, wiederum geroutet würde, und somit zurück gesendet würde (sog. Ping-Pong Schleife). Dies geschieht, indem nach Auswahl des Nachbarknotens in der Routingtabelle geprüft wird, ob dieser Knoten identisch ist mit dem Herkunftsweg der Nachricht.

Eine vollständige, ursprungsabhängige und gleichzeitig zielorientierte Routingtabelle ist kaum zu erstellen. Die schnell wachsende Zahl an möglichen Kombinationen führt zu überproportional wachsendem Rechenaufwand. Auch ist bei Änderung der im Netz befindlichen Knoten oder Ziele eine Veränderung und Anpassung der Routingtabellen dann nur schwer und unflexibel möglich, da großer Aufwand hierzu notwendig ist.

Weiter ist vorstellbar, für im Knoten selbst entstandenen Verkehr bestimmte Wege auszuschließen, da dieser Verkehr leicht zu identifizieren ist.
Auch hierdurch kann nur ein Spezialfall herkunftsabhängig geroutet werden.

Der Erfindung liegt daher die Aufgabe zugrunde, ein Verfahren und eine Vorrichtung zur Verfügung zu stellen, mit denen ein Datengramm mit noch vertretbarem Rechenaufwand und noch ausreichender Flexibilität herkunftsabhängig geroutet werden kann, so daß Wege über bestimmte Netzknoten ausgeschlossen werden.

Die zuvor beschriebene Aufgabe wird erfindungsgemäß gelöst durch die Merkmale der Ansprüche 1.und 8. Die Unteransprüche stellen vorteilhafte Weiterbildungen und günstige Ausführungsformen dar.

Das erfindungsgemäße Verfahren zum ursprungsabhängigen Routen in Telekommunikationsnetzen mit Zeichengabesystem 7 ordnet jede im Netzknoten ankommenden Nachricht einer Gruppe gₗ zu, abhängig davon, über welchen Linkset die Nachricht den Netzknoten erreicht hat. Dies ist einfach möglich, da die Information, über welchen Linkset eine Nachricht den Netzknoten erreicht hat, leicht verfügbar ist. Weiter bildet es Mengen Sᵢ(Wᵢ) bestehend aus Gruppen gₗ (l = 1..j) zu jedem Linkset Wᵢ, wobei der zugeordnete Linkset Wi für i = 1...n einen der Routing Wege zu einem Ziel in der Routingtabelle darstellt, die nach fallender Priorität angeordnet ist. Die Gruppen gₗ sind dabei diejenigen, für die das Routen der den Gruppen zugeordneten Nachrichten erlaubt ist. Somit wird jedem Eintrag der Routingtabelle eine Menge von Gruppen aus erlaubten Linksets als Herkunft der Nachrichten zugeordnet. Dies geschieht für jedes Ziel in der Routingtabelle und alle für dieses Ziel als Ersatzwege eingetragenen Wege Wᵢ. Auf eine weitere Indizierung nach den Routingzielen wurde hier zur besseren Übersichtlichkeit verzichtet.
Eine Nachricht wird verworfen und das Signals TFP an den Herkunftsknoten gesandt, falls gₗ der ankommenden Nachricht ∉ Sᵢ für den gewählten Weg Wᵢ. Durch die Kombination der beschriebenen Merkmale werden die große Anzahl zu berücksichtigender Fälle gegenüber dem vollständigen, den Ursprung einer Nachricht berücksichtigenden Routing sehr stark und sinnvoll eingeschränkt. Das Verfahren ist auch noch flexibel genug, da nur genau so viele Mengen wie Einträge in der Routingtabelle insgesamt bestehen. Eine Änderung ist daher mit ähnlichem Aufwand wie ein Ändern der Routingtabelle an sich möglich. Routen alle Netzknoten in einer gewissen Umgebung eines "verbotenen" Netzknotens, genauer alle, bei denen in der Routingtabelle der "verbotene" Netzknoten eingetragen ist, nach dem beschriebenen Verfahren, kann weitgehend ausgeschlossen werden, daß ein nicht erlaubter Weg über diesen Knoten genommen wird.

Eine weitere Vorteilhafte Einschränkung ist es, den Mengen Sᵢ₊₁ Gruppen gₗ zu entnehmen, solange bis Sᵢ 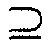 Sᵢ₊₁ gilt.
Das beschriebene Verfahren ermöglicht es relativ sicher, Nachrichten mit einem bestimmten Ursprung zu erfassen, solange nicht zu viele Netzknoten im Netz dazwischen liegen, in denen überall die Möglichkeit eines Ersatzweges bei Nichtverfügbarkeit des nächsten Linksets besteht. Für Wege zwischen einem bestimmten Ursprung über den Netzknoten, in dem das erfindungsgemäße Verfahren angewandt wird, zu einem Netzknoten, der nicht geroutet werden soll, besteht eine hohe Wahrscheinlichkeit, auch wenn mehrere Netzknoten zum Ursprungsknoten führen, daß die überwiegende Anzahl der Nachrichten über bestimmte Linksets im Netz läuft und daher nur festgelegte Eingangslinks diese Nachrichten empfangen. Für nahe liegende Ursprünge von Nachrichten schließt die Forderung Sᵢ₊₁ ⊆ Sᵢ weitgehend aus, daß eine Nachricht einen verbotenen Netzknoten erreicht.

Erfindungsgemäß wird auch eine Nachricht, die aus dem Knoten selbst stammt, einer Gruppe gₗ zugeordnet.
Sollen die Nachrichten in ihrem Verhalten weiter unterschieden werden, so können mehrere Gruppen gₗ vorgesehen sein.

Es ist auch vorteilhaft, das Netzwerkmanagement insoweit anzupassen und dann, wenn ein höherpriorer Weg Wᵢ durch eine TFP Nachricht unverfügbar wird und der Weg Wᵢ₊₁ ausgewählt wird, auch an die Knoten der Gruppen gₗ der Linksets der Menge S_{Diff} = Sᵢ \ Sᵢ₊₁ ( ={gₗ|gₗ ∈ Sᵢ ∧ gₗ ∉ Sᵢ₊₁}), soweit diese Menge nicht leer ist, eine TFP Nachricht zu übermitteln. Dadurch wird verhindert, daß von denjenigen Netzknoten, zu denen Linksets führen deren Gruppen gₗ in S_{Diff} enthalten sind, Nachrichten empfangen werden können. Die Menge S_{Diff} ist die Menge der Gruppen, die beim nächsten in der Routingtabelle zu wählenden Linkset Wᵢ₊₁, der eine niedrigere Priorität hat, nicht mehr erlaubt sind.

Vorteilhaft wird auch, wenn die Gruppen gₗ aus S_{Diff} solche von Nachrichten aus dem eigenen Knoten sind, an die Vorrichtung oder Software, die die Nachricht erzeugt hat, eine Nachricht über das nicht erfolgte Routing weitergegeben. Somit kann die Vorrichtung oder Software des Netzknotens, die die Nachricht erzeugt hat, auf die momentane Unmöglichkeit, diese zu routen, reagieren. Durch unterschiedliche Gruppen für solche Nachrichten können mehrere Fallgruppen in der Reaktion unterschieden werden.

Vorteilhaft einfach wird jede Gruppe gₗ durch ein Bitmuster dargestellt, z.B. von 8 Bit Länge, bei dem genau ein Bit den Wert "1" hat und durch seine Stelle die Gruppe kennzeichnet.

Ebenso kann jede Menge Sᵢ durch ein Bitmuster, z.B. von 8 Bit Länge, dargestellt werden, bei dem für jede Gruppe gₗ, die Element von Sᵢ ist, genau das Bit an der Stelle des entsprechenden Gruppenzeichens den Wert "1" hat.

Weiterhin ist erfindungsgemäß eine Vorrichtung zum Routen in Telekommunikationsnetzen mit Zeichengabesystem 7, vorgesehen. Diese besteht aus einer Speichereinheit, die für jeden Linkset Wᵢ für i = 1...n der einen der Routing Wege zu einem Ziel in der Routingtabelle darstellt, die nach fallender Priorität angeordnet sind, ein die entsprechende Menge Sᵢ(Wᵢ) darstellendes Bitmuster enthält, bestehend aus Gruppen gₗ, l = 1..j, für die das Routen der den Gruppen gₗ zugeordneten Nachrichten erlaubt ist. Die Vorrichtung besteht weiter aus einer Prozessoreinheit, die jede im Netzknoten ankommenden Nachricht einer Gruppe gₗ zuordnet, abhängig davon, über welchen Linkset die Nachricht den Netzknoten erreicht hat und die die Nachricht verwirft und das Signal TFP an den Herkunftsknoten sendet, falls gₗ der ankommenden Nachricht ∉ Sᵢ für den gewählten Weg Wᵢ. Die Vorrichtung weist die schon zuvor beschriebenen Vorteile des Verfahrens auf. Daneben kann sie, wenn die Leistungskapazitäten der Mittel des Netzknotens groß genug sind, in diesen integriert werden, da solche regelmäßig Speichereinheiten und Prozessoreinheiten enthalten.

Eine vorteilhafte Ausführung enthält eine Speichereinheit die Mengen Si darstellende Bitmuster enthält, wobei Sᵢ 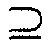 Sᵢ₊₁ gilt.

Günstigerweise ordnet die Prozessoreinheit auch Nachrichten, die aus dem Knoten selbst stammen, mindestens einer Gruppe gₗ zu.

Wenn ein höherpriorer Weg Wᵢ durch eine TFP Nachricht unverfügbar wird und der Weg Wᵢ₊₁ ausgewählt wird, sendet die Prozessoreinheit vorteilhaft, auch an die Knoten der Gruppen gₗ der Linksets der Menge S_{Diff} == Sᵢ \ Sᵢ₊₁ ( ={gₗ|gₗ ∈ Sᵢ Λ gₗ ∉ Sᵢ₊₁}), soweit diese Menge nicht leer ist, eine TFP Nachricht.

Daneben ist es auch günstig, wenn die Prozessoreinheit, falls die Gruppen gₗ aus S_{Diff} solche von Nachrichten aus dem eigenen Knoten sind, an die Vorrichtung oder Software, die die Nachricht erzeugt hat, eine Nachricht über das nicht erfolgte Routing gibt.

In einer vorteilhaft einfachen Ausführung stellt die Speichereinheit jede Gruppe gₗ durch ein Bitmuster dar, z.B. von 8 Bit Länge, bei dem genau ein Bit den Wert "1" hat und durch seine Stelle die Gruppe kennzeichnet.

Ebenso kann die Speichereinheit jede Menge Sᵢ durch ein Bitmuster darstellen , z.B. von 8 Bit Länge, bei dem für jede Gruppe gₗ, die Element von Sᵢ ist, genau das Bit an der Stelle des entsprechenden Gruppenzeichens den Wert "1" hat.

Die Erfindung wird nun anhand eines Ausführungsbeispiels einer Vorrichtung erläutert, die die Gruppen in Bitmustern speichert.

Die Zeichnungen, auf die Bezug genommen wird, zeigen in
- Fig. 1: einen schematischen Ausschnitt aus einem Netz,
- Fig. 2: eine Zuordnungstabelle der Linksets zu den Gruppen,
- Fig. 3: eine Routingtabelle mit den Mengen Si,
- Fig. 4: als Schema das Routing einer Nachricht, die geroutet werden kann,
- Fig. 5: als Schema das Routing einer Nachricht im Verwerfensfall.

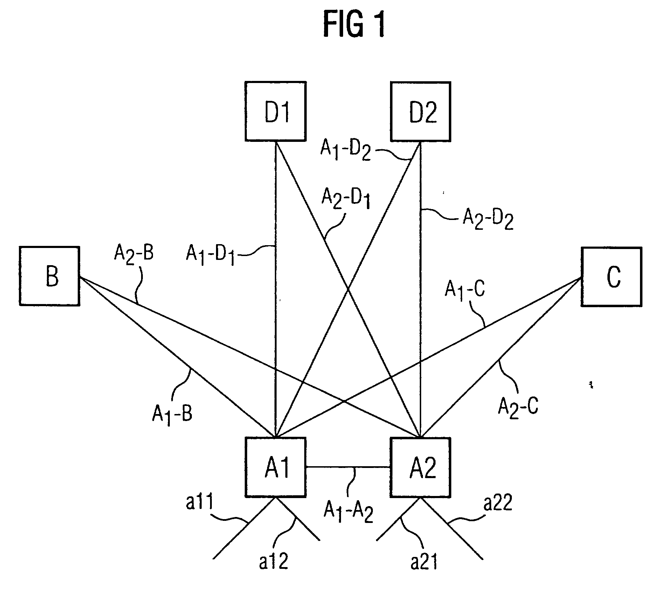

In Fig. 1 sind als Ausschnitt sechs Netzknoten A1, A2, B, C, D1, D2 eines Netzes herausgegriffen. Der Netzknoten A1 enthält beispielhaft die erfindungsgemäße Vorrichtung. Die Linksets A1-A2, A1-B, A1-C, A1-D1, A1-D2, A2-B, A2-C, A2-D1, A2-D2, a11, a12, a21, a22 zwischen den Netzknoten sind durch Linien angedeutet. Einige Linksets a11, a12, a21, a22 sind nur teilweise, nicht bis zum jeweiligen anderen Netzknoten, dargestellt.

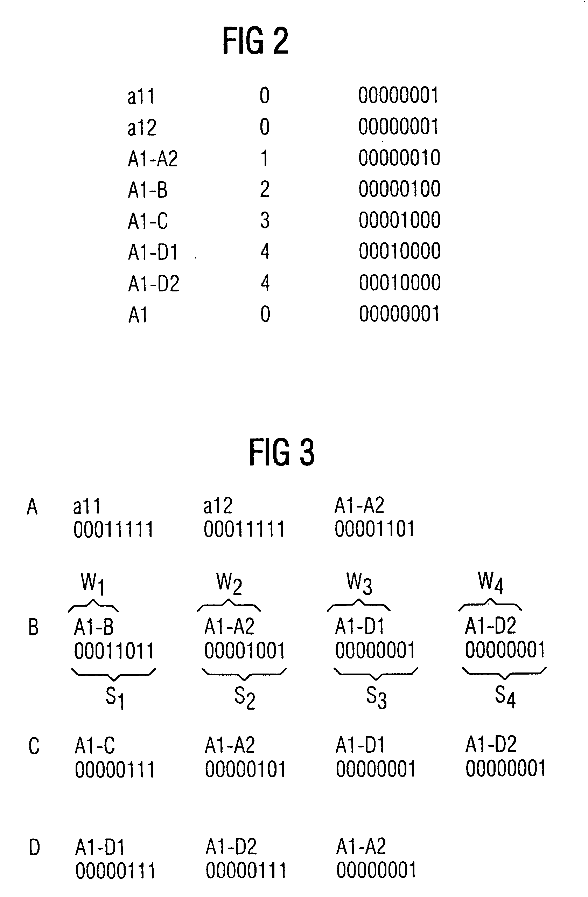

Fig. 2 zeigt schematisch eine Zuordnungstabelle der im Netzknoten A1 ankommenden Nachrichten zu den Gruppen gₗ. Die linke Spalte enthält die Linksets A1-A2, A1-B, A1-C, A1-D1, A1-D2, a11, a12 über die die Nachricht empfangen wird und rechts davon die jeweilige Zuordnung zu einer Gruppe g₁, die durch eine Ziffer von 0 bis 4 bezeichnet ist, entsprechend den Gruppen g₀ bis g₄. Die Spalte rechts zeigt die Darstellung der Gruppen gl in der Speichereinheit als Bitmuster, indem jeweils ein Bit gesetzt ist, dessen Stellung innerhalb des Musters die Gruppe festlegt. Selbstverständlich ist auch eine invertierte Darstellung möglich. Weiter enthält die Zuordnungstabelle einen Eintrag A1 auf der linken Seite für Nachrichten, die im Netzknoten entstanden sind. Diese werden der Gruppe g₀ zugeordnet.

Fig. 3 zeigt einen schematischen Ausschnitt der Routingtabelle des Netzknoten A1. Die linke Spalte enthält die Ziele. Dies sind im Beispiele die direkten Nachbarknoten B und C sowie die mit den Buchstaben D bzw. A zusammengefaßten Netzknoten eines Bereiches. Dies können dann auch beispielsweise ganze Netze eines anderen Netzbetreibers sein. Die rechte Seite zeigt von links nach rechts mit abfallender Priorität die zu wählenden Wege. Für das Ziel B wäre der Linkset A1-B als erster zu wählen, dann A1-A2, A1-D1 und schließlich A1-D2. Dies sind für das Ziel B dann die Linksets W₁ bis W₄. Zu jedem Wi ist darunter abgedruckt das entsprechende Sᵢ(Wᵢ) in der Darstellung als Bitmuster. Hier S₁= 00011011, S₂ = 00001001, S₃ = 00000001 und S₄ = 00000001. Die erlaubten Gruppen sind dann für S₁ g₀, g₁, g₃, g₄, für S₂ g₀ und g₃, für S₃ und S₄ nur g₀. Die jeweils kennzeichnenden Bits sind identisch mit denen der Gruppen in Bitmusterdarstellung.

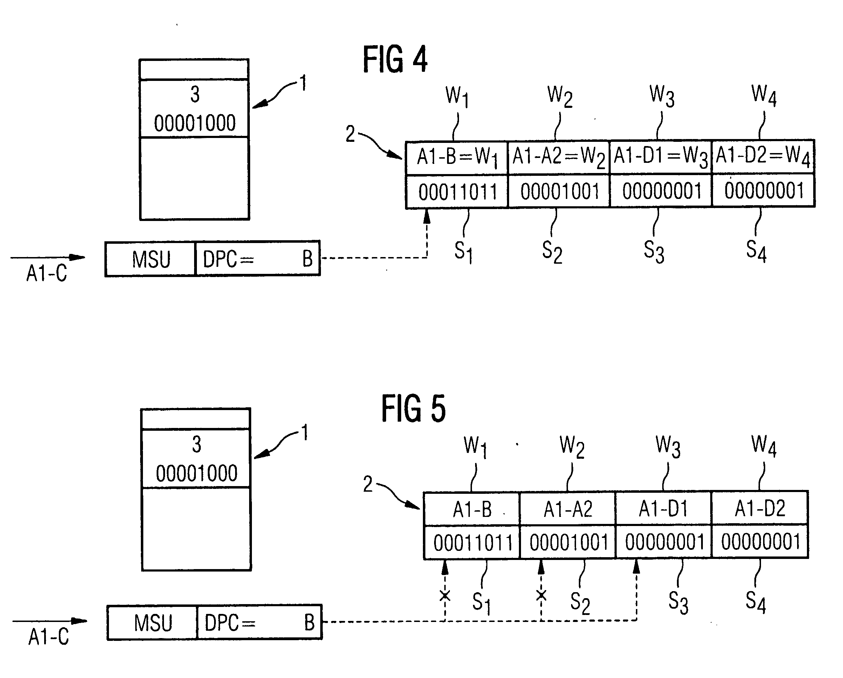

Fig. 4 zeigt ein Schema des Routings beim Fall einer Nachricht, die geroutet werden kann. Die ankommende Nachricht ist als Pfeil angedeutet. Da über die Message Signal Unit (MSU) bekannt ist, daß die Nachricht über den Linkset A1-C empfangen wurde, hier angedeutet durch den unter dem Pfeil vermerkten Linkset A1-C, wird der Nachricht die entsprechende Gruppe g₃ zugeordnet, wie der Zuordnungstabelle in Fig. 2 und dem entsprechenden Ausschnitt aus der Zuordnungstabelle der Gruppen 1 zu entnehmen ist. Die Nachricht sei beispielhaft in den Zielbereich des Netzknotens B zu routen. Zu dem Destination Point Code (DPC) für B enthält der hier gezeigte Ausschnitt der Routingtabelle 2 eine geordnete Menge von zu routenden Linksets A1-B , A1-A2 , A1-D1 und A1-D2 ( = W₁ bis W₄) die der Reihe nach zu wählen sind, wenn der vorige Linkset nicht zur Verfügung steht. Zu jedem Weg Wᵢ ist die entsprechende Menge Sᵢ als Bitmuster gespeichert. W₁ als erster Eintrag mit der höchsten Priorität steht als Linkset, da kein TFP Signal vorliegt, zur Verfügung. Der Vergleich mit S₁ ergibt, daß geroutet werden kann. Die Nachricht wird daher auf dem Linkset A1-B geroutet. Die Auswahl des Linksets ist als gestrichelter Pfeil angedeutet.

Fig. 5 zeigt denselben Ablauf mit derselben Nachricht. Jedoch sei nun beispielhaft der Linkset W₁ selbst gesperrt, ebenso wie der Linkset W₂. Beide können etwa wegen Ausfall der Übertragungsstrecke nicht genutzt werden. Gemäß der hier in einem Ausschnitt dargestellten Routingtabelle 2 ist nun der Linkset W₃ = A1-D1 zu wählen, verdeutlicht durch die durchgestrichenen Auswahlpfeile zu W₁ und W₂ . S₃ enthält jedoch nicht die Gruppe g₃ als erlaubte Gruppe. Daher wird die Nachricht verworfen und über den Linkset A1-C an den Herkunftsknoten C der Nachricht ein TFP Signal gesandt.

Generell können bezüglich der Gruppenauswahl bzw. der Festlegung der Mengen Si(Wi) auch allgemeinere Kriterien verwandt werden. Insbesondere kann die Auswahl anhand der Ursprungsknoten einer Nachricht oder durchlaufener Netzknoten des bisherigen Weges erfolgen.

## Patentansprüche

1. Verfahren zum Routen in Telekommunikationsnetzen mit Zeichengabesystem 7, mit den Schritten
- Zuordnen einer ankommenden Nachricht zu einer vorgegebenen Gruppe g₁ von Linksets in Abhängigkeit von Informationen bezüglich des Weges, über den die Nachricht den Netzknoten erreicht hat.
- Bilden von Mengen Sᵢ(Wᵢ) zu jedem Linkset Wᵢ, wobei jeder Linkset Wᵢ für i = 1...n einen der Routing Wege zu einem Ziel in der Routingtabelle darstellt, wobei die Linksets Wᵢ nach fallender Priorität angeordnet sind, und wobei die Mengen Sᵢ(Wᵢ) aus solchen Gruppen gₗ ( mit l = 1..j) bestehen, für die das Routen der den Gruppen gₗ zugeordneten Nachrichten erlaubt ist.
- Verwerfen der Nachricht, falls g₁ der ankommenden Nachricht ∉ Sᵢ für den routenden Linkset Wᵢ.

2. Verfahren nach Anspruch 1,
**dadurch gekennzeichnet,**
daß die Zuordnung der ankommenden Nachricht zu einer vorgegebenen Gruppe gᵢ von Linksets in Abhängigkeit von Informationen über den letzten Linkset erfolgt, über den die Nachricht angekommen ist.

3. Verfahren nach Anspruch 1 oder 2,
**dadurch gekennzeichnet,**
daß beim Verwerfen der Nachricht ein Signal TFP an den unmittelbaren Nachbarknoten, von dem diese Nachricht erhalten wurde, gesendet wird.

4. Verfahren einem der Ansprüche 1 bis 3,
**dadurch gekennzeichnet,**
daß den Mengen Sᵢ₊₁ Gruppen g₁ entnommen werden, solange bis Sᵢ 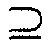 Sᵢ₊₁ für alle i gilt.

5. Verfahren nach einem der Ansprüche 1 bis 4,
**dadurch gekennzeichnet,**
daß auch für eine Nachricht, die aus dem Knoten selbst stammt, mindestens eine Gruppe gₗ vorgesehen ist und dieser Nachricht zugeordnet wird, und im Verwerfensfall an die Vorrichtung oder die Software, die die Nachricht erzeugt hat, eine Nachricht über das nicht erfolgte Routing gegeben wird.

6. Verfahren nach einem der Ansprüche 1 bis 5,
**dadurch gekennzeichnet,**
daß dann wenn ein höherpriorer Linkset Wᵢ durch eine TFP Nachricht oder Ausfall der Übertragungsstrecke unverfügbar wird und der Linkset Wᵢ₊₁ ausgewählt wird, auch an die Knoten der Linksets der Gruppen gₗ der Menge S_{Diff} = Sᵢ \ Sᵢ₊₁ ( ={gₗ|gₗ ∈ Sᵢ ∧ gₗ ∉ Sᵢ₊₁}), soweit diese Menge nicht leer ist, eine TFP Nachricht übermittelt wird.

7. Verfahren nach Anspruch 6,
**dadurch gekennzeichnet,**
daß auch für Nachrichten, die aus dem Knoten selbst stammen, mindestens eine Gruppe gₗ vorgesehen ist und dieser Nachricht zugeordnet wird und wenn die Gruppen gₗ aus S_{Diff} solche von Nachrichten aus dem eigenen Knoten sind, an die Vorrichtung oder die Software, die die Nachricht erzeugt hat, eine Nachricht über das nicht erfolgte Routing gegeben wird.

8. Verfahren nach einem der Ansprüche 1 bis 7,
**dadurch gekennzeichnet,**
daß jede Gruppe gₗ durch ein Bitmuster, beispielsweise von 8 Bit Länge, dargestellt wird, bei dem genau ein Bit den Wert "1" hat und durch seine Stelle die Gruppe kennzeichnet.

9. Verfahren nach einem der Ansprüche 1 bis 8,
**dadurch gekennzeichnet,**
daß jede Menge Sᵢ durch ein Bitmuster, beispielsweise von 8 Bit Länge, dargestellt wird, bei dem für jede Gruppe gₗ, die Element von Sᵢ ist, genau das Bit an der Stelle des entsprechenden Gruppenzeichens den Wert "1" hat.

10. Vorrichtung zum Routen in Telekommunikationsnetzen mit Zeichengabesystem 7, mit
- einer Speichereinheit, die für jeden Linkset Wᵢ für i = 1...n der einen der Routing Wege zu einem Ziel in der Routingtabelle darstellt, die nach fallender Priorität angeordnet sind, ein die entsprechende Menge Sᵢ(Wᵢ) darstellendes Bitmuster enthält, bestehend aus Gruppen gₗ, l = 1..j, für die das Routen der den Gruppen gₗ zugeordneten Nachrichten erlaubt ist, und mit
- einer Prozessoreinheit, die jede im Netzknoten (2) ankommende Nachricht einer vorgegebenen Gruppe in Abhängigkeit von Informationen bezüglich des Weges zuordnet, über welchen die Nachricht den Netzknoten erreicht hat, und die Nachricht verwirft, falls gₗ der ankommenden Nachricht ∉ Sᵢ für den zu routenden Linkset Wᵢ ist.

11. Vorrichtung nach Anspruch 10,
**dadurch gekennzeichnet,**
daß die Prozessoreinheit die Zuordnung der ankommenden Nachricht zu einer vorgegebenen Gruppe gᵢ von Linksets in Abhängigkeit von Informationen über den letzten Linkset vornimmt, über den die Nachricht angekommen ist.

12. Vorrichtung nach Anspruch 10 oder 11,
**dadurch gekennzeichnet,**
daß die Prozessoreinheit beim Verwerfen der Nachricht ein Signal TFP an den unmittelbaren Netzknoten sendet, von dem die Nachricht erhalten wurde.

13. Vorrichtung nach einem der Ansprüche 10 bis 12,
**dadurch gekennzeichnet,**
daß die Speichereinheit die Mengen Sᵢ darstellende Bitmuster enthält, wobei Sᵢ 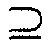 Sᵢ₊₁.gilt.

14. Vorrichtung nach einem der Ansprüche 10 bis 13,
**dadurch gekennzeichnet,**
daß die Prozessoreinheit auch Nachrichten, die aus dem Knoten selbst stammen, mindestens eine Gruppe gₗ zuordnet und im Verwerfensfall an die Vorrichtung oder die Software, die die Nachricht erzeugt hat, eine Nachricht über das nicht erfolgte Routing gibt.

15. Vorrichtung nach einem der Ansprüche 10 bis 14,
**dadurch gekennzeichnet,**
daß die Prozessoreinheit, wenn ein höherpriorer Weg Wᵢ durch eine TFP Nachricht unverfügbar wird und der Weg Wᵢ₊₁ ausgewählt wird, auch an die Knoten der Linksets der Gruppen gₗ der Menge S_{Diff} = Sᵢ \ Sᵢ₊₁ ( ={gₗ|gₗ ∈ Sᵢ ∧ gₗ ∉ Sᵢ₊₁}), soweit diese Menge nicht leer ist, eine TFP Nachricht übermittelt.

16. Vorrichtung nach Anspruch 15,
**dadurch gekennzeichnet,**
daß die Prozessoreinheit auch Nachrichten, die aus dem Knoten selbst stammen, mindestens eine Gruppe gₗ zuordnet und wenn die Gruppen gₗ aus S_{Diff} solche von Nachrichten aus dem eigenen Knoten sind, an die Vorrichtung oder Software, die die Nachricht erzeugt hat, eine Nachricht über das nicht erfolgte Routing gibt.

17. Vorrichtung nach einem der Ansprüche 10 bis 16,
**dadurch gekennzeichnet,**
daß die Speichereinheit jede Gruppe gₗ durch ein Bitmuster, beispielsweise von 8 Bit Länge, darstellt, bei dem genau ein Bit den Wert "1" hat und durch seine Stelle die Gruppe kennzeichnet.

18. Vorrichtung nach einem der Ansprüche 10 bis 17,
**dadurch gekennzeichnet,**
daß die Speichereinheit jede Menge Sᵢ durch ein Bitmuster, beispielsweise von 8 Bit Länge, darstellt , bei dem für jede Gruppe gₗ, die Element von Sᵢ ist, genau das Bit an der Stelle des entsprechenden Gruppenzeichens den Wert "1" hat.
